(19) Europäisches Patentamt
European Patent Office
Office européen des brevets

(11) EP 1 355 867 B1

(12) FASCICULE DE BREVET EUROPEEN

(45) Date de publication et mention de la délivrance du brevet:
**16.02.2005 Bulletin 2005/07**

(21) Numéro de dépôt: **01995799.2**

(22) Date de dépôt: **27.12.2001**

(51) Int Cl.$^7$: **C04B 41/64**

(86) Numéro de dépôt international:
**PCT/FR2001/004217**

(87) Numéro de publication internationale:
**WO 2002/053515 (11.07.2002 Gazette 2002/28)**

# (54) UTILISATION D'UN POLYORGANOSILOXANE FONCTIONNALISE EPOXY ET/OU CARBOXY, A TITRE DE MATIERE ACTIVE DANS UNE COMPOSITION SILICONE LIQUIDE D'HYDROFUGATION DE MATERIAUX DE CONSTRUCTION

VERWENDUNG EINES EPOXY- UND/ODER CARBOXYFUNKTIONALISIERTEN POLYORGANOSILOXANS ALS WIRKSUBSTANZ IN EINER FLÜSSIGEN SILIKONZUSAMMENSETZUNG ZUR HYDROPHOBIERUNG VON BAUMATERIALIEN

USE OF AN EPOXY- AND/OR CARBOXY-FUNCTIONALISED POLYORGANOSILOXANE, AS ACTIVE MATERIAL IN A LIQUID SILICONE COMPOSITION FOR WATER REPELLENCY TREATMENT OF BUILDING MATERIALS

(84) Etats contractants désignés:
**AT BE CH CY DE DK ES FI FR GB GR IE IT LI LU MC NL PT SE TR**

(30) Priorité: **29.12.2000 FR 0017309**

(43) Date de publication de la demande:
**29.10.2003 Bulletin 2003/44**

(73) Titulaire: **Rhodia Chimie**
**92100 Boulogne Billancourt (FR)**

(72) Inventeurs:
- **DERUELLE, Martial**
  **F-69390 Millery (FR)**
- **MIGNANI, Gérard**
  **F-69008 LYON (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
**FR-A- 2 784 115**
**US-A- 4 810 748**
**US-A- 4 876 152**
**US-A- 5 080 824**
**US-A- 6 120 849**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

Le domaine de l'invention est celui de l'hydrofugation des matériaux de construction poreux (notamment minéraux ou [ligno]cellulosiques), donc sensibles à l'humidité. En général, l'hydrofugation est réalisée sur les éléments en matériaux de construction une fois assemblés pour former des parties de bâtiments. Plus précisément, les traitements d'hydrofugation auxquels on s'intéresse dans le cadre de l'invention sont ceux réalisés à l'aide de compositions silicone liquides, comprenant des composés siliciques du genre organosilanes, voire polyorganosiloxanes. Les matériaux de construction poreux considérés peuvent être par exemple des pierres à base de carbonate de calcium et/ou de silice et/ou d'alumino-silicates, des bétons, des mortiers, des terres cuites (briques, tuiles, etc...), des bois...

En particulier, l'invention concerne des compositions silicones liquides d'hydrofugation, destinées à imprégner des matériaux poreux de construction, par exemple minéraux ou (ligno)cellulosiques.

Plus précisément, l'invention a pour objet l'utilisation d'une classe particulière de polyorganosilox,anes fonctionnalisés à titre de matière active principale dans ces compositions silicone liquide d'hydrofugation.

Sont également visés par l'invention un procédé d'hydrofugation de matériaux de construction poreux de préférence minéraux ou (ligno)cellulosiques, à l'aide de la susdite composition silicone liquide, ainsi qu'un procédé de préparation de cette dernière.

On sait que les organosilanes (notamment alcoxylés, hydroxylés ou aminés) et dans une moindre mesure les polyorganosiloxanes (POS) sont utilisés depuis de nombreuses années pour imprégner des matériaux de construction poreux (par exemple minéraux ou (ligno)cellulosiques), de façon à les doter d'une protection contre la pénétration par l'eau, dont les effets néfastes vis-à-vis des constructions sont légion : éclats dus au gel, apparitions de mousses et lichens, pertes d'isolation thermique, etc...

Les compositions silicone liquides d'hydrofugation existent soit sous forme de solutions dans des solvants organiques tels que le "white spirit" ou l'heptane, soit sous forme d'émulsions aqueuses apparues plus récemment sur le marché. Classiquement, après l'imprégnation, la phase solvant organique ou la phase aqueuse de ces compositions se volatilise et la matière active silicone demeure dans la masse et à la périphérie du matériau de construction poreux, de manière à former une barrière contre l'humidité.

Pour des raisons de coût, d'hygiène, de sécurité et de respect de l'environnement, on cherche à remplacer les compositions silicones liquides d'hydrofugation en phase solvant par des émulsions silicones aqueuses. Mais on s'est heurté à un certain nombre de difficultés importantes dans la mise au point de ces systèmes d'hydrofugation silicone aqueux. A cet égard, le problème majeur est de garantir la stabilité à la conservation de l'émulsion silicone aqueuse, tout en maintenant pour les constituants de la matière active silicique une efficacité d'hydrofugation au moins aussi bonne que celle obtenue avec les systèmes en phase solvant. Cette efficacité est notamment dépendante de la réactivité de la matière active silicique vis-à-vis du support poreux à hydrofuger. En effet, il est courant de constater qu'un gain de réactivité ne s'obtient qu'au détriment de la stabilité de l'émulsion.
Pour qu'une hydrofugation à l'aide d'une composition silicone liquide soit réussie, il importe :

- que la rhéologie de cette dernière permette une pénétration dans le matériau de construction poreux sur une épaisseur allant de plusieurs millimètres à plusieurs centimètres,
- que se produise une réaction entre le matériau de construction poreux et la matière silicique active d'hydrofugation,
- et que de préférence, cette matière silicique active réticule dans le matériau de construction poreux, cette réticulation pouvant être la réaction qui va générer la création de liaisons entre le matériau de construction poreux et la matière silicique d'hydrofugation.

Deux autres difficultés majeures rencontrées dans la formulation de systèmes silicone aqueux d'hydrofugation sont les suivantes :

- compatibilisation d'un composé hydrophobe siliconé dans un milieu hydrophile comme l'eau,
- stabilité des fonctions réactives d'un milieu aqueux.

Il s'agit donc de trouver un compromis entre stabilité et réactivité.

Pour satisfaire à ces spécifications techniques, il a été proposé dans l'art antérieur de mettre en oeuvre des compositions silicone liquides comprenant des silanes alcoxylés et/ou hydroxylés et/ou aminés, qui ont !'avantage d'avoir une masse moléculaire suffisamment faible pour bien pénétrer dans les matériaux de construction poreux et qui sont aptes à se condenser in situ pour produire des résines silicone réticulées.

Les émulsions aqueuses de silanes alcoxylés et/ou hydroxylés et/ou aminés posent des problèmes de stabilité qui étaient résolus jusqu'à lors qu'en mettant en oeuvre de fortes concentrations d'émulsifiants, ces derniers ayant un effet néfaste sur l'hydrofugation.

Les documents EP-A-0 442 098, EP-A-0 358 652 et US-A-4 620 878 divulguent de tels systèmes aqueux

d'hydrofugation formés par des émulsions silicones aqueuses fortement concentrées en émulsifiants.

Le document US-A-5 073 195 décrit des compositions silicone liquides d'hydrofugation comprenant des alkyltrialcoxysilanes insolubles dans l'eau, des aminoalkylalcoxysilanes solubles dans l'eau. L'inconvénient de ces compositions est qu'elles produisent lors de l'hydrolyse des fonctions alcoxy, des alcools libres nuisibles à l'hydrofugation.

La demande de brevet européen EP-A-0 675 128 décrit des compositions silicone liquides d'hydrofugation se présentant sous forme d'émulsions aqueuses à base d'organosilanes solubles dans l'eau (aminoalkylalcoxysilanes) et de petites quantités d'organosilanes non solubles dans l'eau (méthyltriméthoxysitane ou vinyltriméthoxysilane). Il est clair que la présence d'importantes quantités de silanes. hydrophiles ne va pas dans le sens de l'amélioration de l'hydrofugation.

L'EP-A-0 716 127 et l'EP-A-0 716 128 divulguent des émulsions aqueuses sans alcool pour hydrofugation, à base d'aminosilanes solubles dans l'eau et d'alkylsilanes, de vinylsilanes ou d'uréidosilanes non solubles dans l'eau. La matière silicique d'hydrofugation selon ces compositions offrent des propriétés d'adhésion sur le matériau de construction poreux peu satisfaisantes.

Pour pallier les carences des silanes fonctionnalisés dans les compositions silicones liquides d'hydrofugation, il a été proposé de mettre en oeuvre des émulsions aqueuses d'hydrofugation contenant comme matières actives silicones des résines comportant des motifs M, T et/ou Q, étant rappelé que dans la terminologie de la chimie des silicones on définit les motifs siloxaniques M, D, T, Q comme suit :

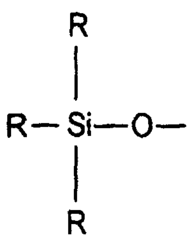
M

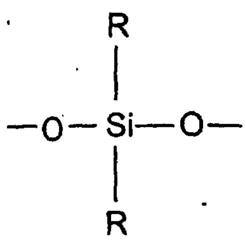
D

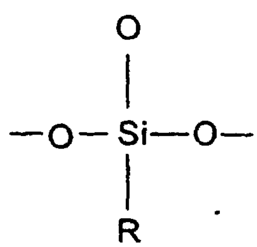
T

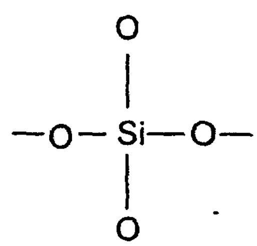
Q

On connaît également des systèmes mixtes aqueux à base de silanes aminés et/ou alcoxylés et de résines alcoxylées DT(OR) et/ou de résines MQ.

Tous ces systèmes aqueux connus restent perfectibles.

Par ailleurs, le brevet américain US-A-5 885 341 décrit des formulations aqueuses sans solvant contenant des POS :

- fonctionnalisés par des motifs alkylglycidyléther et/ou alkylacryloxy et/ou alkylméthacryloxy et/ou aminoalkyle, dans lesquels chaque atome de silicium comporte un motif fonctionnel,
- et obtenus à partir d'alcoxysilanes porteurs des fonctionnalités susmentionnées.

Ce genre de compositions silicone liquides d'hydrofugation souffre d'inconvénients rédhibitoires qui tiennent à la complexité du procédé de préparation du POS fonctionnalisé, laquelle préparation nécessite en effet la mise en oeuvre de deux, trois voire quatre silanes fonctionnalisés différents avec des étapes de chauffage et de distillation relativement lourdes.

En outre, les résultats obtenus en termes de stabilité au stockage de l'émulsion aqueuse et en termes d'hydrofugation ne sont pas optimums.

L'US-B,4,876,152 décrit des compositions silicone d'hydrofugation d'ouvrages de maçonnerie comprennent le produit de la réaction d'un polyorganosiloxane linéaire porteur de motifs SiH avec un anhydride succinique alcénylé ($C_7$-$C_{30}$). Il s'agit d'une réaction d'hydrosilylation catalysée par le platine qui conduit à un POS linéaire constitué par des motifs diméthylsiloxy (D) et par des motifs siloxy (D') substitués par un méthyle et par une fonction anhydride succinique reliée au silicium par une rotule en $C_7$-$C_{30}$. Ce POS linéaire est porteur de motifs (M) tryméthysiloxy en bout de chaîne. Ce POS fonctionnalisé par l'anhydride succinique est mis en solution dans des essences minérales ou en émulsion dans une phase aqueuse. La formulation silicone ainsi obtenue est appliquée sur des substrats de maçonnerie, par exemple en ciment. il n'est pas fait état de réticulation du POS fonctionnalisé anhydride sur le support à hydrofuger. Le niveau des performances d'hydrofugation reste à apprécier, de même que la qualité de l'accrochage sur le support. Il y a tout lieu de penser que cette formulation silicone ne donne pas entière satisfaction à cet égard.

La demande FR-A-2 784 115 concerne une peinture contenant :

A - 3 à 30 parties en poids d'un latex de copolymère organique par exemple styrène/acrylique comprenant 50% de matière sèche ;
B - un POS linéaire époxydé, à raison de 0,05 parties en poids, sous forme d'émulsion dont l'extrait sec est de 65% ;
C - et une charge par exemple du carbone de calcium à raison de 100 parties en poids.

L'émulsion de POS époxy-fonctionnalisé est décrite dans ce document comme étant un additif hydrofugeant pour la réalisation d'un liant de peinture. Il est clair que le POS époxy fonctionnalisé selon ce document n'est pas le constituant actif majoritaire d'hydrofugation de la peinture divulguée. il s'agit seulement d'un additif présent en très faible proportion dans la matière active. Ainsi, dans les exemples D, le POS époxy-fonctionnalisé ne représente que 0,96% en poids sec de la matière active constituée essentiellement par le latex styrène/acrylique A. Par ailleurs, le FR-A-2 784 115 ne fait pas allusion à une quelconque aptitude du POS époxy-fonctionnalisé B à réticuler et à réagir à lui seul. avec le substrat de construction. En fait, le FR-A-2 784 115 ne divulgue rien d'autre qu'une peinture comportant du POS époxy fonctionnalisé à titre d'additif hydrofugeant et liant.

Enfin, le brevet US-A-5 196 054 décrit une préparation pour l'imprégnation hydrofugeante de matériaux de construction minéraux et poreux. Cette préparation se présentant sous forme d'émulsions aqueuses comprenant à titre de matière active silicone:

a) 5 à 45% en poids d'un tri-alcoxysilane,
b) 45 à 5 % en poids d'un mélange consistant en :

- un tri-atcoxysitane aminé et éventuellement porteur de motifs époxy,
- et un POS $\alpha,\omega$-diol, ces fonctions hydroxy terminales étant condensables avec le tri-atcoxysitane alcoxylé ou aminé,

c) 0,5 à 10% en poids d'un émulsifiant,
d) 40 à 49,5% d'eau.

Conformément à l'exemple 3, l'émulsion aqueuse d'hydrofugation obtenue comprend un POS porteur de 30 à 80 motifs D, dont les extrémités sont fonctionnalisées par un reste 3-(glycidyloxypropyl)trialcoxysilane [1,2 silane/chaîne]. L'émulsifiant utilisé est un mélange d'alcools gras éthoxylés et d'alkylarylsulfonate. La matière active silicone comprend également du n-propyltriéthoxysilane. L'émulsion comporte (en parties en poids = pp) :

62 pp de POS $\alpha,\omega$-époxydé,
49 pp de propyltriéthoxysilane,
et 11 pp d'émulsifiants,
pour 100 pp d'eau.

La présence d'alkyltrialcoxysilane dans la matière active silicone de cette composition liquide d'hydrofugation, est un facteur d'instabilité et de limitation des performances d'hydrofugation. La présence de cet alkyltrialcoxysilane est nécessaire selon cette référence antérieure afin de provoquer une réaction de réticulation et de réaction de la matière silicone active avec le substrat à hydrofuger. En bref, cette émulsion aqueuse associant alcoxysilanes et POS $\alpha,\omega$-aminés ou époxydés est perfectible.

C'est précisément l'un des objectifs essentiels de la présente invention que de perfectionner cet art antérieur en remédiant aux carences des autres propositions techniques antérieures discutées ci-dessus.

Un autre objectif essentiel de l'invention est de proposer une composition silicone liquide d'hydrofugation qui offre le meilleur compromis technique possible sur le plan du coût, de la facilité de mise en oeuvre, de la stabilité au stockage, de l'accrochage aux matériaux à hydrofuger, ainsi que sur le plan de l'efficacité d'hydrofugation en intensité et en durée.

Un autre objectif essentiel de l'invention est de proposer une composition silicone liquide d'hydrofugation se présentant sous forme d'émulsion aqueuse stable et très réactive sur le support à imprégner.

Un autre objectif essentiel de l'invention est de proposer une composition liquide d'hydrofugation qui soit stable au stockage et qui soit apte à réagir/réticuler avec le matériau de construction à hydrofuger, dès lors que se produit la mise en contact de ladite composition avec ledit matériau.

Un autre objectif essentiel de l'invention est de fournir une composition silicone liquide d'hydrofugation qui soit exempte de silanes, et notamment de silanes porteurs de motifs condensables du type alcoxy et/ou hydroxy.

Un autre objectif essentiel de l'invention est de proposer l'utilisation de composés silicone fonctionnalisés connus dans une nouvelle fonctionnalité, à savoir l'hydrofugation de matériaux de construction poreux [minéraux et/ou (ligno)-cellulosiques].

Un autre objectif essentiel' de l'invention est de proposer un procédé d'hydrofugation de matériaux de construction poreux [minéraux et/ou (ligno)-cellulosiques], qui soit facile à mettre en oeuvre, sûr et performant.
Un autre objectif essentiel de l'invention est de fournir un procédé de préparation d'une composition silicone d'hydrofugation du type de celle évoquée dans les susdits objectifs.
Ces objectifs, parmi d'autres, sont atteints par l'invention qui concerne tout d'abord l'utilisation d'au moins un polyorganosiloxane (POS) linéaire ou cyclique porteur de motifs :

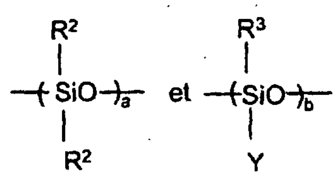

ce POS étant de préférence linéaire, de formule (I) :

(I) 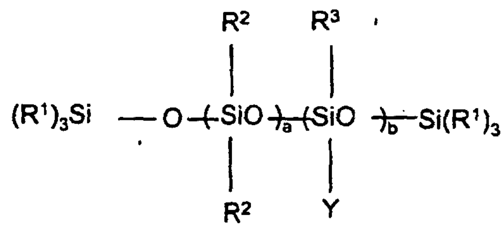

dans laquelle:

- les radicaux $R^1$ sont identiques ou différents entre eux et représentent chacun un alkyle, un aryle, un arylalkyle ou Y ; de préférence un alkyle en C1-C10 linéaire ou ramifié ou un phényle;
- les radicaux $R^2$ sont identiques ou différents entre eux et représentent chacun un alkyle, un aryle ou un arylalkyle; de préférence un alkyle en C1-C10 linéaire ou ramifié ou un phényle ;
- le radical $R^3$ représente un alkyle, un aryle, un arylalkyle ou Y : de préférence un alkyle en C1-C10 linéaire ou ramifié, ou un phényle ;
- le radical Y est un radical fonctionnel choisi parmi ceux porteurs d'au moins un motif époxy;
- a et b sont choisis de telle sorte que :

$$1 \leq a + b \leq 1000$$

de préférence

$$10 \leq a + b \leq 200$$

et plus préférentiellement encore

$$50 \leq a + b \leq 100$$

et

$$1/1000 \leq b/(a + b) < 1$$

de préférence

$$1/100 \leq b/(a + b) \leq 4/5$$

et plus préférentiellement encore

$$1/20 \leq b/(a + b) \leq 3/4 ,$$

- b peut être égal à 0 et dans ce cas au moins l'un des radicaux $R^1$ représente Y, de préférence au moins l'un des radicaux $R^1$ sur chacun des deux Si terminaux du POS de formule (I) correspond à Y,

pour imprégner un matériau de construction poreux, de façon à le rendre hydrofuge,

- ce POS (I) représentant au moins 50% en poids, de préférence au moins 80% en poids, et plus préférentiellement encore au moins 90% en poids de la matière active de la composition silicone liquide d'hydrofugation,
- ce POS (f) étant à lui seul apte à réticuler dès lors qu'il est en contact avec le matériau de construction et/ou à réagir avec ce dernier pour se lier à lui.

Selon une variante; b est différent de 0 dans la formule (I) du POS mis en oeuvre dans le cadre de l'utilisation selon l'invention. Dans cette variante, le POS (I) comporte nécessairement au moins une fonction Y dans la chaîne.
Il apparaît ainsi que la présente invention procède de la sélection d'une classe particulière de POS fonctionnalisés par des motifs époxy, ces POS sélectionnés ayant par ailleurs un nombre limité de motifs siloxanes.
De manière tout à fait surprenante et inattendue, les inventeurs ont ainsi mis en évidence, après de longues et laborieuses recherches, que les silicones fonctionnalisés appartenant à la classe sélectionnée selon l'invention, réagissent et réticulent au contact de matériaux de construction, en particulier de matériaux de construction poreux du type:

- ✓ pierres à base de $CaCO_3$ et/ou de $SiO_2$ et/ou d'alumino-silicates (argiles),
- ✓ du type béton ou mortier,
- ✓ bois,
- ✓ ou bien encore terres cuites, tuiles...

S'agissant des POS fonctionnalisés époxy et des matériaux de construction poreux (basiques) du type de ceux comprenant du $CaCO_3$, il est étonnant de constater que les motifs époxy réagissent sans catalyseur, sans amorceur et sans activation actinique ou à la chaleur, dans des conditions basiques, alors que l'homme du métier sait que les conditions normales d'ouverture des cycles époxy sont plutôt des conditions acides.
Conformément à l'utilisation selon l'invention, les émulsions aqueuses d'hydrofugation sont peu réactives donc stables au stockage (plusieurs mois) car leur tendance à polycondenser dans les gouttelettes de phase silicone est réduite. Par contre, ces systèmes réagissent au contact de supports dits réactifs, souvent alcalins tels que le mortier, le béton ou les terres cuites.
Au sens de la présente invention, le terme *"matière active"* désigne avantageusement, tout ce qui constitue la composition silicone liquide à l'exclusion du véhicule (support) liquide, qui peut être le solvant dans le cas où la composition est une solution, ou bien encore la phase continue ( par exemple aqueuse) dans le cas où la composition est une émulsion ou une dispersion. La *"matière active"* correspond à l'ensemble des constituants de la composition qui sont actifs dans l'hydrofugation. Cela englobe, entre autres, les silicones.
Conformément à l'utilisation selon l'invention, il est préférable de mettre en oeuvre des POS fonctionnalisés linéaires, sachant que les POS fonctionnalisés Y cycliques (par exempte des POS de type D4) pourraient convenir.
La sélection selon l'invention permet d'aboutir à un compromis entre, d'une part, la densité de réticulation et de création de liaisons avec le matériau de construction poreux, et d'autre part, l'optimisation de l'hydrophobie finale de la matière active silicone.
Au sens de l'invention, l'un des critères d'évaluation des performances d'hydrofugation est donné par la mesure de l'angle de goutte. On considère qu'une surface de matériau de construction est suffisamment hydrophobe dès lors que cet angle de goutte est supérieur ou égal à 90°.
Un autre critère plus sévère est celui de la reprise en eau d'un matériau hydrofugé plongé dans un milieu aqueux. Ainsi, les performances des hydrofugations seront excellentes si l'échantillon est apte à séjourner 28 jours dans l'eau, sans que le phénomène de reprise ne se produise.
En fait, la pierre ou les autres matériaux de construction 'poreux peuvent permettent d'amorcer la réticulation des POS époxydés selon l'invention, laquelle réticulation est nécessaire à l'hydrofugation.

Au sein d'une même composition silicone liquide d'hydrofugation, on peut utiliser des POS identiques ou différents.

Les motifs Y fonctionnels peuvent être présents dans la chaîne polyorganosiloxanique sur les motifs D, et/ou sur au moins l'une des deux extrémités de la chaîne.

Dans le mode préféré de réalisation de l'invention, le ou les POS (I) est (sont) fonctionnalisé(s) par au moins un radical Y porteur d'au moins un motif époxy et les radicaux $R^2$ représentent indépendamment :

- un alkyle inférieur en C1-C6 de préférence de type méthyle, éthyle propyle ou octyle ou bien encore un cycloalkyle contenant entre 5 et 8 atomes de carbone,
- un radical aryle contenant entre 6 et 12 atomes de carbone pouvant être substitués, de préférence un phényle ou un dichlorophényle,
- ou un radical aralkyle ayant une partie alkyle contenant entre 5 et 14 atomes de carbone, et une partie aryle contenant entre 6 et 12 atomes de carbone, éventuellement substitués sur la partie aryle par des halogènes, des alkyles et/ou des alcoxyles contenant de 1 à 3 atomes de carbone.

Toujours selon un mode préféré de mise en oeuvre de l'invention, les radicaux $R^1$ terminaux répondent à la même définition que celle préférée donnée ci-dessus pour $R^2$.

Il est également souhaitable que les motifs fonctionnels Y correspondent indépendamment à un groupement époxy-fonctionnel, relié au silicium du POS par l'intermédiaire d'un radical divalent contenant de 2 à 20 atomes de carbone et pouvant contenir au moins un hétéroatome de préférence l'oxygène.

De manière plus préférée encore, Y est sélectionné parmi les radicaux suivants :

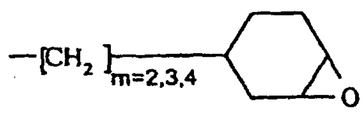 ; 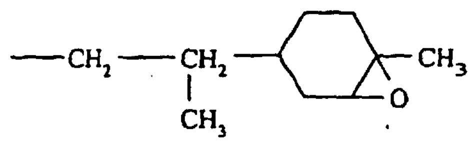

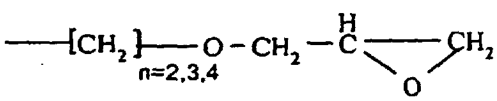 ; 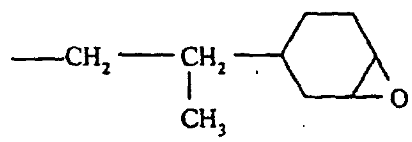

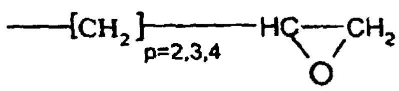 ; 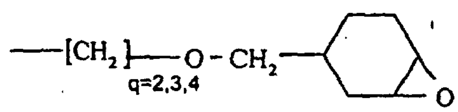

Selon une variante, les radicaux $R^1$, $R^2$, $R^3$ et Y peuvent être substitués notamment par des halogènes.

En pratique, les radicaux $R^3$, dès lors qu'ils sont différents de Y, répondent indépendamment à la même définition que celle donnée ci-dessus pour $R^2$ et $R^1$.

Dans ce mode préféré de réalisation, les fonctions Y époxydés sont de préférence dans la'chaîne et éventuellement sur au moins l'un des Si terminaux de la formule (I).

Selon une variante, une partie des radicaux fonctionnels Y peuvent être des radicaux Y' porteurs d'au moins un motif acide carboxylique et/ou se! d'acide carboxylique et/ou anhydride d'acide carboxylique.

Ces motifs Y' peuvent être par exemple:

$$-(CH_2)_x-COOH$$

$-(CH_2)_y-$(anhydride ou acide succinique)

$-(CH_2)_y-$(anhydride ou acide malique)

avec x = 2 à 30 et y = 0 à 30.

Avantageusement, les fonctions Y' sont dans la chaîne et/ou en bout de chaîne du POS (I), par exemple aux deux extrémités seulement.

Les POS (I) linéaires peuvent être des huiles de viscosité dynamique à 25°C de l'ordre de 10 à 100 000 mPa. s, généralement de l'ordre de 50 à 5 000 mPa.s, et plus préférentiellement encore de 100 à 600 mPa.s, ou des gommes présentant une masse moléculaire de l'ordre de $1x10^6$g.

Lorsqu'il s'agit de POS cycliques, ceux-ci sont constitués de motifs D porteurs avantageusement d'un radical fonctionnel Y et d'un radical R3 tels que définis ci-dessus.

Ces polyorganosiloxanes cycliques peuvent présenter une viscosité de l'ordre de 1 à 5 000 mPa.s à 25°C.

La viscosité dynamique à 25°C, de tous les silicones considérés dans le présent exposé peut être mesurée à l'aide d'un viscosimètre BROOKFIELD, selon la norme AFNOR NFT 76 102 de février 1972.

L'obtention de tels POS fonctionnalisés est parfaitement à la portée de l'homme du métier de la chimie des silicones.

Selon une disposition avantageuse de l'invention, dans le cadre de l'utilisation, la composition silicone liquide d'hydrofugation est une émulsion aqueuse contenant :

a) un ou plusieurs POS (I)
b) un ou plusieurs tensioactifs
c) et de l'eau.

Le ou les tensioactifs mis en oeuvre sont des tensioactifs non ioniques, ioniques ou zwitterioniques.

En pratique, il peut s'agir par exemple d'uri tensioactif non ionique du type alcool gras éthoxylé comprenant 13 atomes de carbone et 8 motifs éthoxy.

Sur le plan quantitatif, il peut être intéressant de préciser que les proportions pondérales des constituants de la composition silicone liquide d'hydrofugation sont telles que pour 100 parties en poids (pp) d'eau, on ait :

- POS (I) : de 1 à 100 pp, de préférence de 1 à 50 et plus préférentiellement encore de 1 à 15 ;
- Tensioactifs : de 0,01 à 10 pp, de préférence de 0,1 à 10 et plus préférentiellement encore de 1 à 5.

La présente invention n'est pas exclusive d'autres formes liquides de compositions silicone d'hydrofugation, que les émulsions aqueuses. C'est ainsi que ladite composition silicone liquide d'hydrofugation peut être une solution du ou des POS (I) dans un solvant organique.

A titre d'exemples de solvant organique, on peut citer le white-spirit et l'heptane.

Selon une modalité intéressante de l'invention, le matériau de construction poreux [de préférence minéral ou (ligno)cellulosique] est sélectionné dans le groupe comprenant :

- les minéraux à base de $CaCO_3$,
- les minéraux à base de $SiO_2$,
- les minéraux à base d'aluminosilicates,
- les bétons/mortiers,
- les terres cuites,
- et leurs mélanges.

L'utilisation selon l'invention est également avantageuse en ce que la matière active de la composition silicone liquide d'hydrofugation est exempte de silane(s) fonctionnalisé (s) ou non.

Outre les constituants principaux décrits ci-dessus, la composition silicone liquide d'hydrofugation conforme à l'utilisation selon l'invention peut également comporter des additifs choisis dans le groupe comprenant :

- les silices, de préférence les silices colloïdales,
- les acides de Lewis, de préférence les sulfates et/ou les hydrogénosulfates et/ou les triflates et/ou les oxalates

et/ou les silicates,

- les résines silicone comportant des motifs siloxyle M, Q et/ou T,
- les silanes alkylaminés, de préférence choisis parmi ceux de formule générale (II) suivante:

$$R^5\text{-[Si]-[}OR^6]_3 \qquad (II)$$

dans laquelle :

- • $R^5$ est un radical aminoalkyle ayant de 1 à 6 atomes de carbone ou un groupement de formule générale : $H_2N\text{-}(CH_2)_xR^7\text{-}(CH_2)_z\text{-}$ ; avec $R^7$ représentant O, S, -NH- ou $NH\text{-}CH_2\text{-}CH_2\text{-}NH\text{-}$ et $x \geq 2$, $y \geq 2$; ou un groupement de formule générale : $(R^6O)_3\text{-}(CH_2)_x\text{-}NH\text{-}(CH_2)_x$, avec x tel que défini ci-dessus;
- • $R^6$ correspondant à $C_nH_{2n+1}$ avec n= 0 à 10;

- les additifs aminés,
- et leurs mélanges.

Comme exemples d'acides de Lewis convenables, on peut citer les sulfates d'aluminium, de fer, de calcium, de nickel.......
Comme exemples de silanes aminoalkylés convenables, on peut citer les silanes aminés hydroxylés tels que l'aminopropyltrihydroxysilane.
Les additifs aminés peuvent jouer le rôle de stabilisants de la composition silicone liquide d'hydrofugation, avant réticulation et/ou polymérisation. Ces stabilisants porteurs de fonctions amine peuvent être par exemple des amines encombrées telles que les amines de type HALS. La demande de brevet PCT WO-98107798 divulgue des amines susceptibles d'être employées comme stabilisants dans la composition silicone liquide d'hydrofugation, conforme à l'utilisation selon l'invention.

Les concentrations de tous ces additifs sont par exempte de l'ordre de 0,1 à 10 parties en poids sur sec. Parmi ces additifs, on distingue les additifs qui sont associés à la phase aqueuse dans le cas d'une émulsion, à savoir les silices et les sels, et les additifs compatibles avec la phase silicone huileuse (POS I), à savoir les résines silicones à motifs MQ et/ou T, et éventuellement D.

Par ailleurs, de manière classique, on peut également mettre en oeuvre des adjuvants anti-mousse, des biocides, des modificateurs de rhéologie, des agents de coalescence, des agents dispersants, des agents neutralisants et/ou des agents épaississants.
Les concentrations, en de tels adjuvants sont connus de l'homme du métier.

De préférence, la composition selon l'invention est exempte de copolymère(s) organique(s). En pratique et plus précisément, c'est la matière active de la composition qui ne comprend pas de copolymère(s) organique(s).

Suivant un autre de ses aspects, la présente invention concerne un procédé d'hydrofugation d'un matériau de construction poreux, ce procédé consistant à imprégner ledit matériau avec une composition liquide comportant au moins un polyorganosiloxane (POS),
caractérisé en ce que :

- on met en oeuvre un POS linéaire ou cyclique, porteur de motifs

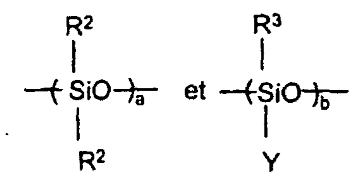

ce POS étant de préférence linéaire, de formule (I) :

(I) 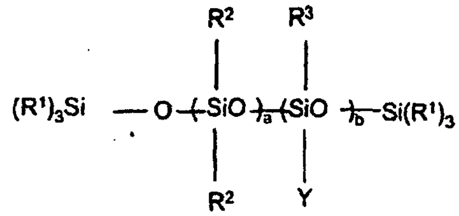

dans laquelle:

- les radicaux $R^1$ sont identiques ou différents entre eux et représentent chacun un alkyle, un aryle, un arylalkyle ou Y ; de préférence un alkyle en C1-C10 linéaire ou ramifié ou un phényle ;
- les radicaux $R^2$ sont identiques ou différents entre eux et représentent chacun un alkyle, un aryle ou un arylalkyle; de préférence un alkyle en C1-C10 linéaire ou ramifié ou un phényle ;
- le radical $R^3$ représente un alkyle, un aryle, un arylalkyle ou Y ; de préférence un alkyle en C1-C10 linéaire ou ramifié, ou un phényle;
- le radical Y est un radical fonctionnel choisi parmi ceux porteurs d'au moins un motif époxy;
- a et b sont choisis de telle sorte que :

$$1 \leq a + b \leq 1000$$

de préférence

$$10 \leq a + b \leq 200$$

et plus préférentiellement encore

$$50 \leq a + b \leq 100$$

et

$$1/1000 \leq b/(a + b) < 1$$

de préférence

$$1/100 \leq b/(a + b) \leq 4/5$$

et plus préférentiellement encore

$$1/20 \leq b/(a + b) \leq 3l4$$

- b peut être égal à 0 et dans ce cas au moins l'un des radicaux $R^1$ représente Y, de préférence au moins l'un des radicaux $R^1$ sur chacun des deux Si terminaux du POS de formule (I) correspond à Y,

- on applique cette dernière composition sur le matériau de construction poreux,
- on laisse le contact se faire entre le POS (I) et le matériau de construction poreux [par exempte minéral ou (ligno) cellulosique], de manière que se produise(nt) une réticulation dudit POS (I) et/ou une réaction du POS (I) avec le matériau, laquelle réaction conduisant à la formation de liaisons entre le POS (I) et le matériau.

L'invention sera mieux comprise à l'aide des exemples qui suivent et qui décrivent la préparation de compositions silicone liquides d'hydrofugation sous forme d'émulsions aqueuses et sous forme de solutions organiques, l'application desdites compositions sur des matériaux de construction constitués par des pierres et par du béton et l'évaluation des propriétés hydrofugeantes obtenues grâce à la mise en oeuvre de l'utilisation selon l'invention.

## EXEMPLES

### Exemple 1 : Silicones époxydés déposés en phase solvant

1.1/ Les POS utilisés dans cet exemple sont des POS époxydés de formule (I.1 ) :

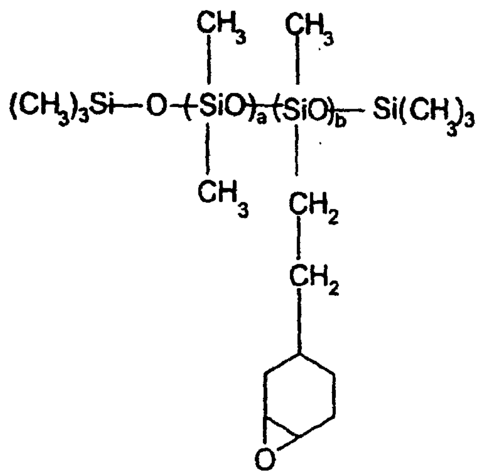

POS(I) : a=4, b=8
POS(II) : a=7, b=70
POS(III) : a=2, b=200
POS{IV) : a=100, b=0 (il s'agit d'une huile silicone non fonctionnalisée).

1.2/ Mode opératoire :

- Le POS est mis en solution dans l'heptane à 10% massique.
- On imbibe le support (ici pierre de saint Vaast) à raison de 2 l/$m^2$ de solution. Les pierres sont immergées de 5mm dans la solution.
- On laisse sécher 1 jour sous hotte ventilée puis 14 jours en salle conditionnée (25°C, 50%HR)

1.3/ Mesures:

- On mesure les angles de mouillage à l'eau 1 jours et 15 jours après le traitement.
- Au bout de 15 jours de séchage, on mesure l'épaisseur hydrofugée en cassant un des supports et en révélant la partie hydrophobée par aspersion d'eau sur les faces cassées.
- Après 15 jours de séchage on trempe un second support traité dans 2 mm d'eau et on suit quotidiennement la reprise en eau du matériau. On retient les quantités d'eau reprises par les supports après 15 jours et 28 jours d'immersion. On exprime ces quantités par rapport à la quantité d'eau absorbée par une pierre non traitée. Un traitement parfait correspond alors à une reprise de 0%, et un traitement totalement inefficace à une reprise de 100%.

1.4/ Résultats :

TABLEAU 1

| | POS(I) | POS(II) | POS(III) | POS(IV) |
|---|---|---|---|---|
| Angle de goutte : | | | | |
| A 1 jour | 113° | 107° | 110° | 0° |
| A 15 jours | 113° | 121 ° | 110° | 0° |
| Epaisseur hydrofugée : | 14 mm | 13mm | 10 mm | 0 mm |
| Reprise en eau : | | | | |
| A 15 jours | < 2% | < 2% | < 2% | 100% |
| A 28 jours | < 2% | < 2% | < 2% | 100% |

**<u>Exempte 2 : Silicones époxydés déposés en émulsion :</u>**

2.1/ Les POS(II) et POS (IV) sont utilisés dans cet exemple.

Le tensioactif utilisé est un alcool gras (chaîne de 13 carbones) éthoxylé (8 motifs éthoxy), commercialisé sous la dénomination ROX par la Société RHODIA CHIMIE.

2.2/ Mode opératoire :

- Le POS est mis en émulsion dans l'eau à l'aide du tensioactif susvisé par les procédés classiques d'émulsification (homogénéiseur haute pression).
- L'émulsion A contient 10 parties de POS(II), 2 parties de tensioactif et 88 parties d'eau.
- L'émulsion B contient 10 parties de POS(IV), 2 parties de tensioactif et 88 parties d'eau.
- On imbibe le support (ici pierres de saint Vaast et de Tuffeau) à raison de 2 $l/m^2$ de l'émulsion. Les pierres sont immergées de 5mm dans la solution.
- On laisse sécher 1 jour sous hotte ventilée puis 14 jours en salle conditionnée (25°C, 50%HR).

2.3/ Mesures :

- On mesure les angles de mouillage à l'eau 1 jours et 15 jours après le traitement.
- Au bout de 15 jours de séchage on mesure l'épaisseur hydrofugée en cassant un des supports et en révélant la partie hydrophobée par aspersion d'eau sur les faces cassées.
- Après 15 jours de séchage on trempe un second support traité dans 2mm d'eau et on suit quotidiennement la reprise en eau du matériau. On retient les quantités d'eau reprises par les supports après 15 jours et 28 jours d'immersion. On exprime ces quantités par rapport à la quantité d'eau absorbée par une pierre non traitée. Un traitement parfait correspond alors à une reprise de 0%, et un traitement totalement inefficace à une reprise de 100%.

2.4/ Résultats :

TABLEAU 3

| | Emulsion A de POS (II) Sur Saint Vaast | Emulsion A de POS (II) Sur Tuffeau | Emulsion B de POS (IV) Sur Saint Vaast | Emulsion B de POS (IV) Sur Tuffeau |
|---|---|---|---|---|
| Angles de goutte : | | | | |
| A 1 jour<br>A 15 jours | 100°<br>119° | 123°<br>119° | 0°<br>0° | 0°<br>0° |
| Epaisseur hydrofugée | 6 mm | 1 mm | 0 mm | 0 mm |
| Reprises en eau : | | | | |
| A 15 jours<br>A 28 jours | < 2%<br>< 2% | 15%<br>20% | 100%<br>100% | 100%<br>100% |

**<u>Exemple 3 : Silicones époxydés déposés en émulsion et additivés :</u>**

3.1/ L'émulsion C est contient :

- 10 parties d'un mélange de POS(II) (70%) et de résine MQ (30%),
- 1,5 parties de tensioactif, constitué par un alcool gras (chaîne de 13 carbones) éthoxylé (8 motifs ethoxy), commercialisé sous la dénomination ROX par la Société RHODIA CHIMIE,
- 88,5 parties d'eau.

L'émulsion D contient :

- 10 parties de POS(I),
- 1,5 parties de tensioactif, constitué par un alcool gras (chaîne de 13 carbones) éthoxylé (8 motifs ethoxy), commercialisé sous la dénomination ROX par la Société RHODIA CHIMIE,
- 1,5 parties de sulfate d'aluminium,
- 87 parties d'eau.

3.2/ Mode opératoire :

- Le POS est mis en émulsion dans l'eau à l'aide du tensioactif susvisé par les procédés classique d'émulsification (homogénéiseur haute pression).
- On imbibe le support (ici pierre de saint Vaast) à raison de 2 l/$m^2$ de l'émulsion. Les pierres sont immergées de 5mm dans la solution.
- On laisse sécher 1 jour sous hotte ventilée puis 14 jours en salle conditionnée (25°C, 50%HR).

3.3/ Mesures :

- On mesure les angles de mouillage à l'eau 1 jours et 15jours après le traitement.
- Au bout de 15 jours de séchage, on mesure l'épaisseur hydrofugée en cassant un des supports et en révélant la partie hydrophobée par aspersion d'eau sur les faces cassées.
- Après 15 jours de séchage on trempe un second support traité dans 2 mm d'eau et on suit quotidiennement la reprise en eau du matériau. On retient les quantités d'eau reprises par les supports après 15 jours et 28 jours d'immersion. On exprime ces quantités par rapport à la quantité d'eau absorbée par une pierre non traitée. Un

traitement parfait correspond alors à une reprise de 0%, et un traitement totalement inefficace à une reprise de 100%.

3.4/ Résultats:

TABLEAU 4

| | Emulsion C Sur Saint Vaast | Emulsion D Sur Saint Vaast | Emulsion A Sur Saint Vaast |
|---|---|---|---|
| Angles de goutte : | | | |
| A 1 jour<br>A 15 jours | 130°<br>128° | 118 °<br>122 ° | 100°<br>119° |
| Epaisseur hydrofugée : | 5 mm | 6.5 mm | 6 mm |
| Reprises en eau : | ' | | |
| A 15 jours<br>A 28 jours | < 2%<br>< 2% | < 2%<br>< 2% | <2 %<br><2 % |

**Revendications**

**1.** Utilisation d'au moins un polyorganosiloxane (POS) linéaire ou cyclique porteur de motifs

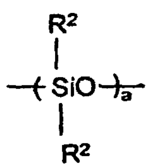 et 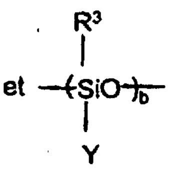

ce POS étant de préférence linéaire, de formule (I) :

(I) 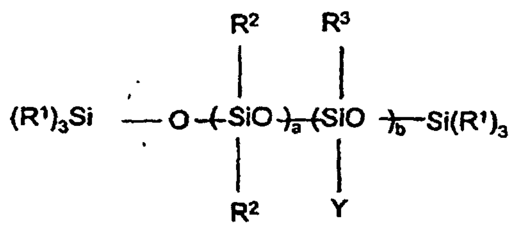

dans laquelle:

- les radicaux $R^1$ sont identiques ou différents entre eux et représentent chacun un alkyle, un aryle, un arylalkyle ou Y ; de préférence un alkyle en C1-C10 linéaire ou ramifié ou un phényle ;
- les radicaux $R^2$ sont identiques ou différents entre eux et représentent chacun un alkyle, un aryle ou un arylalkyle; de préférence un alkyle en C1-C10 linéaire ou ramifié ou un phényle ;
- le radical $R^3$ représente un alkyle, un aryle, un arylalkyle ou Y ; de préférence un alkyle en C1-C10 linéaire ou ramifié, ou un phényle ;
- le radical Y est un radical fonctionnel choisi parmi ceux porteurs d'au moins un motif époxy;
- a et b sont choisis de telle sorte que :

$$1 \leq a + b \leq 1000$$

de préférence

$$10 \leq a + b \leq 200$$

et plus préférentiellement encore

$$50 \leq a + b \leq 100$$

et

$$1/1000 \leq b/(a + b) < 1$$

de préférence

$$1/100 \leq b/(a + b) \leq 4/5$$

et plus préférentiellement encore

$$1/20 \leq b/(a + b) \leq 3/4$$

- b peut être égal à 0 et dans ce cas au moins l'un des radicaux $R^1$ représente Y, de préférence au moins l'un des radicaux $R^1$ sur chacun des deux Si terminaux du POS de formule (I) correspond à Y,

pour imprégner un matériau de construction poreux, de façon à la rendre hydrofuge, ce (ou ces) POS étant la matière active d'une composition silicone liquide d'imprégnation,
ce POS (I) représentant au moins 50% en poids, de préférence au moins 80% en poids, et plus préférentiellement encore au moins 90% en poids de la matière active, ce POS (I) étant à lui seul apte à réticuler dès lors qu'il est en contact avec le matériau de construction et/ou à réagir avec ce dernier pour se lier à lui.

**2.** Utilisation selon la revendication 1, **caractérisée en ce que** b est différent de 0 dans la formule (I).

**3.** Utilisation selon la revendication 1 ou 2, **caractérisée en ce que** le POS (I) est fonctionnalisé par au moins un radical Y époxy-fonctionnet, relié au silicium du POS par l'intermédiaire d'un radical divalent contenant de 2 à 20 atomes de carbone et pouvant contenir au moins un hétéroatome de préférence l'oxygène, porteur d'au moins un motif époxy, Y étant de préférence sélectionné par les radicaux suivants :

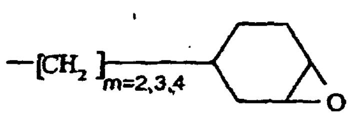 ; 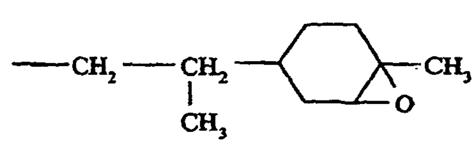

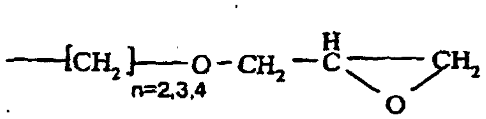 ; 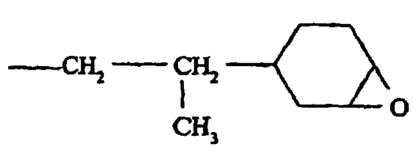

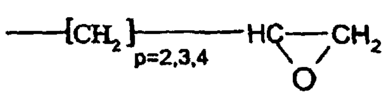 ; 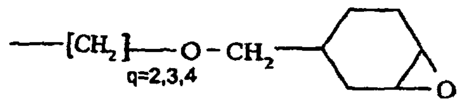

**4.** Utilisation selon l'une quelconque des revendications 1 à 3, **caractérisée en ce que** la composition silicone liquide d'hydrofugation est une émulsion aqueuse contenant :

b) un ou plusieurs POS (I)
c) un ou plusieurs tensioactifs
d) et de l'eau.

**5.** Utilisation selon la revendication 4, **caractérisée en ce que** les proportions pondérales des constituants de la composition silicone liquide d'hydrofugation sont telles que pour 100 parties en poids (pp) d'eau, on a :

- POS (I) : de 1 à 100 pp, de préférence de 1 à 50 et plus préférentiellement encore de 1 à 15 ;
- Tensioactifs : de 0,01 à 10 pp, de préférence de 0,1 à 10 et plus préférentiellement encore de 1 à 5.

**6.** Utilisation selon l'une quelconque des revendications 1 à 3, **caractérisée en ce que** la composition silicone liquide d'hydrofugation est une solution du des POS (I) dans un solvant organique.

**7.** Utilisation selon la revendication 3 et éventuellement la revendication 4 et/ou 5 et/ou 6, **caractérisée en ce que** le matériau de construction minéral est poreux est sélectionné dans le groupe comprenant :

- les minéraux à base de $CaCO_3$
- les minéraux à base de $SiO_2$
- les minéraux à base d'aluminosilicates
- les terres cuites
- les bétons/mortiers
- et leurs mélanges.

**8.** Utilisation selon la revendication 1, **caractérisée en ce que** le POS (I) présente des radicaux Y porteurs de motif (s) (di)carboxy, (di)carboxytate et/ou anhydride et **en ce que** le matériau de construction poreux est sélectionné parmi les minéraux comprenant du $CaCO_3$.

**9.** Utilisation selon l'une quelconque des revendications 1 à 8, **caractérisée en ce que** la matière active de la composition silicone liquide d'hydrofugation est exempte de silane(s) fonctionnatisé(s) ou non.

**10.** Utilisation selon l'une quelconque des revendications 1 à 9, **caractérisée en ce que** la composition silicone liquide d'hydrofugation comporte des additifs choisis dans le groupe comprenant :

- les silices, de préférence les silices colloïdales,
- les acides de Lewis, de préférence les sulfates et/ou les hydrogénosulfates et/ou les triflates et/ou les oxalates et/ou les silicates,
- les résines silicone comportant des motifs siloxyle M, Q et/ou T,
- les silanes alkylaminés, de préférence choisis parmi ceux de formule générale (II) suivante:

$$R^5\text{-[Si]-[}OR^6]_3 \qquad \text{(II)}$$

dans laquelle :

- $R^5$ est un radical aminoalkyle ayant de 1 à 6 atomes de carbone ou un groupement de formule générale : $H_2N\text{-}(CH_2)_xR^7\text{-}(CH_2)_z\text{-}$ ; avec $R^7$ représentant O, S, -NH- ou NH-$CH_2$-$CH_2$-NH- et x≥ 2, y≥ 2; ou un grou-

pement de formule générale : $(R^6O)_3$-$(CH_2)_x$-NH-$(CH_2)_x$, avec x tel que défini ci-dessus;
- $R^6$ correspondant à $C_nH_{2n+1}$ avec n= 0 à 10;

- les additifs aminés,
- et leurs mélanges.

**11.** Procédé d'hydrofugation d'un matériau de construction minéral et poreux, ce procédé consistant à imprégner ledit matériau avec une composition liquide comportant au moins un polyorganosiloxane (POS), **caractérisé en ce que** :

- on met en oeuvre un POS linéaire ou cyclique tel que défini dans la revendication 1, porteur de motifs

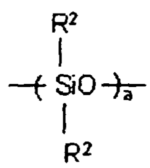 et 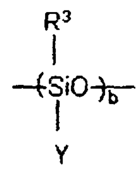

ce POS étant de préférence linéaire de formule (I) telle que définie dans la revendication 1 ou 2, ce POS (I) représentant au moins 50% en poids de la matière active d'une composition silicone liquide d'imprégnation,
- on applique cette dernière composition sur le matériau de construction minéral et poreux,
- on laisse le contact se faire entre le POS (I) et le matériau de construction minéral et poreux, de manière que se produise(nt) une réticulation dudit POS (I) et/ou une réaction du POS (I) avec le matériau laquelle réaction conduisant à la formation de liaisons entre le POS (I) et le matériau.

**Patentansprüche**

**1.** Verwendung wenigstens eines linearen oder cyclischen Polyorganosiloxans (POS), Träger von Einheiten

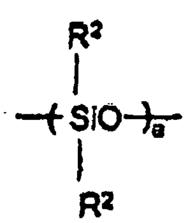 und 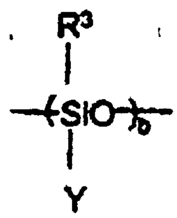

wobei dieses POS vorzugsweise linear ist, mit der Formel (I):

(I) 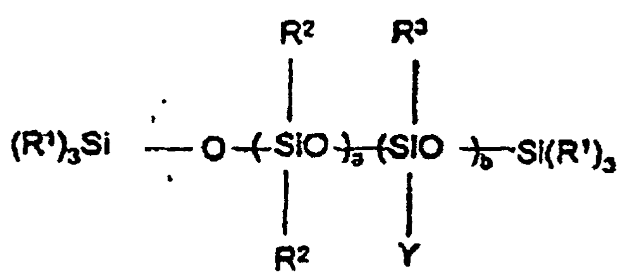

worin:

- die Reste $R^1$ untereinander gleich oder verschieden sind und jeweils ein Alkyl, ein Aryl, ein Arylalkyl oder Y;

vorzugsweise ein lineares oder verzweigtes C1-C10-Alkyl oder ein Phenyl darstellen;

- die Reste $R^2$ untereinander gleich oder verschieden sind und jeweils ein Alkyl, ein Aryl oder ein Arylalkyl; vorzugsweise ein lineares oder verzweigtes C1-C10-Alkyf oder ein Phenyl darstellen;
- der Rest Wein Alkyl, ein Aryl, ein Arylalkyl oder Y; vorzugsweise ein lineares oder verzweigtes C1-C10-Alkyl oder ein Phenyl darstellt;
- der Rest Y ein funktioneller Rest ist, der ausgewählt ist unter denen, die wenigstens eine Epoxyeinheit tragen;
- a und b so ausgewählt sind, dass:

$$1 \leq a + b \leq 1000$$

vorzugsweise

$$10 \leq a + b \leq 200$$

und noch stärker bevorzugt

$$50 \leq a + b \leq 100$$

und

$$1/1000 \leq b/(a + b) < 1$$

vorzugsweise

$$1/100 \leq b/(a + b) \leq 4/5$$

und noch stärker bevorzugt

$$1/20 \leq b/(a + b) \leq 3/4$$

- b gleich 0 sein kann und in diesem Fall wenigstens einer der Reste $R^1$ Y darstellt, vorzugsweise wenigstens einer der Reste $R^1$ an jedem der beiden endständigen Si des POS der Formel (I) Y entspricht,

zum Imprägnieren eines porösen Baumaterials, um es Wasser abweisend zu machen, wobei dieses (oder diese) POS die Wirksubstanz einer flüssigen Siliconzusammensetzung zum imprägnieren ist,
wobei dieses POS (I) wenigstens 50 Gew.-%, vorzugsweise wenigstens 80 Gew.-% und noch stärker bevorzugt wenigstens 90 Gew.-% der Wirksubstanz darstellt,
und wobei dieses POS (I) allein in der Lage ist zu vernetzen, sobald es mit dem Baumaterial in Kontakt steht, und/ oder mit diesem Letzteren zu reagieren, um sich mit ihm zu verbinden.

2. Verwendung gemäß Anspruch 1, **dadurch gekennzeichnet, dass** in der Formel (I) b von 0 verschieden ist.

3. Verwendung gemäß Anspruch 1 oder 2, **dadurch gekennzeichnet, dass** das POS (I) mit wenigstens einem epoxyfunktionellen Rest Y funktionalisiert ist, der an das Silicium des POS über einen zweiwertigen Rest gebunden ist, der 2 bis 20 Kohlenstoffatome enthält und wenigstens ein Heteroatom, vorzugsweise Sauerstoff enthalten kann, Träger wenigstens einer Epoxyeinheit, wobei Y vorzugsweise ausgewählt ist unter den folgenden Resten:

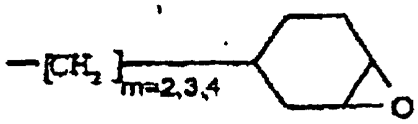 ; 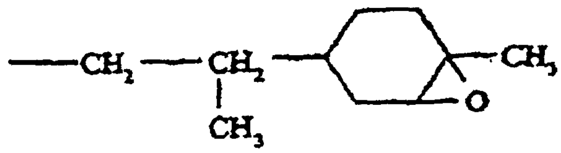

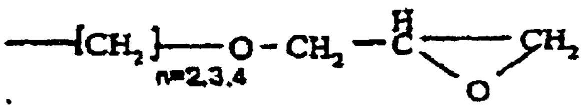 ; 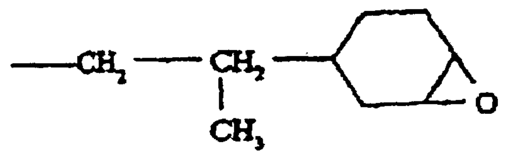

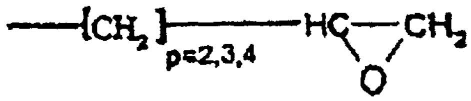 ; 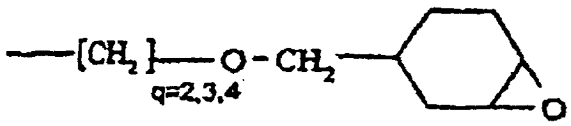

**4.** Verwendung gemäß einem der Ansprüche 1 bis 3, **dadurch gekennzeichnet, dass** die flüssige Siliconzusammensetzung zur Hydrophobierung eine wässrige Emulsion ist, die enthält:

a) ein oder mehrere POS (I)
b) ein oder mehrere Tenside
c) und Wasser.

**5.** Verwendung gemäß Anspruch 4, **dadurch gekennzeichnet, dass** die Gewichtsanteile der Bestandteile der flüssigen Siliconzusammensetzung zur Hydrophobierung so sind, dass auf 100 Gewichtsteile (pp) Wasser vorliegen:

- POS (I): 1 bis 100 pp, vorzugsweise 1 bis 50 und noch stärker bevorzugt 1 bis 15;
- Tenside: 0,01 bis 10 pp, vorzugsweise 0,1 bis 10 und noch stärker bevorzugt 1 bis 5.

**6.** Verwendung gemäß einem der Ansprüche 1 bis 3, **dadurch gekennzeichnet, dass** die flüssige Siliconzusammensetzung zur Hydrophobierung eine Lösung des oder der POS (I) in einem organischen Lösungsmittel ist.

**7.** Verwendung gemäß Anspruch 3 und gegebenenfalls Anspruch 4 und/oder 5 und/oder 6, **dadurch gekennzeichnet, dass** das mineralische Baumaterial porös ist und ausgewählt ist aus der Gruppe, die umfasst:

- die Minerale auf der Basis von $CaCO_3$
- die Minerale auf der Basis von $SiO_2$
- die Minerale auf der Basis von Aluminosilikaten
- die Terrakotten
- die Betone/Mörtel
- und deren Gemische.

**8.** Verwendung gemäß Anspruch 1, **dadurch gekennzeichnet, dass** das POS (I) Reste Y aufweist, die (Di)carboxy-, (Di)carboxylat- und/oder Anhydrideinheit(en) tragen, und dadurch, dass das poröse Baumaterial ausgewählt ist unter den Mineralen, die $CaCO_3$ umfassen.

**9.** Verwendung gemäß einem der Ansprüche 1 bis 8, **dadurch gekennzeichnet, dass** die Wirksubstanz der flüssigen Siliconzusammensetzung zur Hydrophobierung frei von funktionalisiertem(en) oder nicht funktionalisiertem(en) Silan(en) ist.

**10.** Verwendung gemäß einem der Ansprüche 1 bis 9, **dadurch gekennzeichnet, dass** die flüssige Siliconzusammensetzung zur Hydrophobierung Zusätze enthält, die ausgewählt sind aus der Gruppe, die umfasst:

- die Siliciumdioxide, vorzugsweise die kolloidalen Siliciumdioxide,
- die Lewissäuren, vorzugsweise die Sulfate und/oder die Hydrogensutfate und/oder die Triflate und/oder die Oxalate und/oder die Silicate,
- die Siliconharze, die Siloxyleinheiten M, Q und/oder T umfassen,
- die Alkylaminsilane, die vorzugsweise ausgewählt sind unter denen der folgenden allgemeinen Formel (II):

$$R^5\text{-[Si]}\text{-}[OR^6]_3 \qquad \text{(II)}$$

worin:

- $R^5$ ein Aminoalkylrest mit 1 bis 6 Kohlenstoffatomen oder eine Gruppe der allgemeinen Formel: $H_2N\text{-}(CH_2)_xR^7\text{-}(CH_2)_z\text{-}$ ist; wobei $R^7$ O, S, -NH- oder $NH\text{-}CH_2\text{-}CH_2\text{-}NH\text{-}$ darstellt und $x \geq 2$, $y \geq 2$; oder eine Gruppe der allgemeinen Formel: $(R^6O)_3\text{-}(CH_2)_x\text{-}NH\text{-}(CH_2)_x$ ist, wobei x wie oben definiert ist;
- $R_6$ $C_nH_{2n+1}$ mit n = 0 bis 10 entspricht;

- die Aminzusätze
- und deren Gemische.

**11.** Verfahren zur Hydrophobierung eines mineralischen und porösen Baumaterials, wobei dieses Verfahren darin besteht, besagtes Material mit einer flüssigen Zusammensetzung zu tränken, die wenigstens ein Polyorganosiloxan (POS) umfasst,
**dadurch gekennzeichnet, dass**:

- man ein lineares oder cyclisches POS, wie in Anspruch 1 definiert, Träger von Einheiten

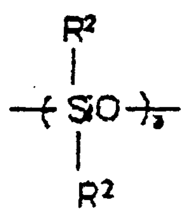

und

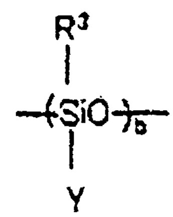

einsetzt, wobei dieses POS vorzugsweise linear ist, mit der Formel (I), wie in Anspruch 1 oder 2 definiert, wobei dieses POS (I) wenigstens 50 Gew.-% der Wirksubstanz einer flüssigen Siliconzusammensetzung zum Imprägnieren darstellt,
- man diese letztere Zusammensetzung auf das mineralische und poröse Baumaterial aufträgt,
- man den Kontakt zwischen dem POS (I) und dem mineralischen und porösen Baumaterial erfolgen lässt, so dass eine Vernetzung besagten POS (I) und/oder eine Reaktion des POS (I) mit dem Material erfolgt, wobei diese Reaktion zur Bildung von Bindungen zwischen dem POS (I) und dem Material führt.

## Claims

**1.** Use of at least one linear or cyclic polyorganosiloxane (POS) bearing units:

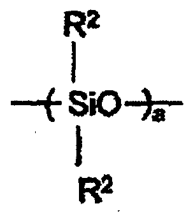 and 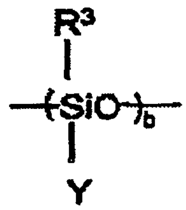

this POS preferably being linear, of formula (I):

(I) 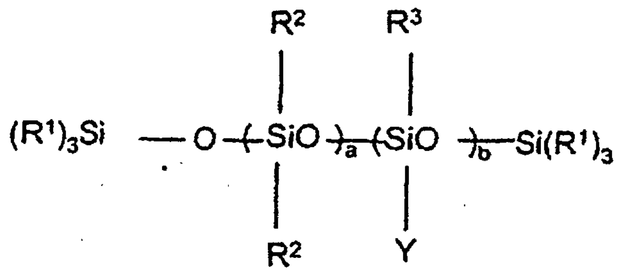

in which:

- the radicals $R^1$ are identical to or different from each other and each represent an alkyl, an aryl, an arylalkyl or Y; preferably a linear or branched $C_1$-$C_{10}$ alkyl or a phenyl;
- the radicals $R^2$ are identical to or different from each other and each represent an alkyl, an aryl or an arylalkyl; preferably a linear or branched $C_1$-$C_{10}$ alkyl or a phenyl;
- the radical $R^3$ represents an alkyl, an aryl, an arylalkyl or Y; preferably a linear or branched $C_1$-$C_{10}$ alkyl or a phenyl;
- the radical Y is a functional radical chosen from those carrying at least one epoxy unit;
- a and b are chosen such that:

$$1 \leq a + b \leq 1000$$

preferably

$$10 \leq a + b \leq 200$$

and even more preferably

$$50 \leq a + b \leq 100$$

and

$$1/1000 \leq b/(a + b) < 1$$

preferably

$$1/100 \leq b/(a + b) \leq 4/5$$

and even more preferably

$$1/20 \le b/(a + b) \le 3/4,$$

- b may be equal to 0, and in this case at least one of the radicals $R^1$ represents Y, preferably at least one of the radicals $R^1$ on each of the two terminal Si atoms of the POS of formula (I) corresponds to Y,

in order to impregnate a porous building material, so as to make it water-repellent, this (or these) POS being the active material of a liquid silicone impregnation composition,
this POS (I) representing at least 50% by weight, preferably at least 80% by weight and even more preferably at least 90% by weight of the active material,
this POS (I) being capable by itself of crosslinking as soon as it comes into contact with the building material and/or of reacting with the said building material to bind thereto.

2. Use according to Claim 1, **characterized in that** b is other than 0 in formula (I).

3. Use according to Claim 1 or 2, **characterized in that** the POS (I) is functionalized with at least one epoxy-functional radical Y, linked to the silicon of the POS via a divalent radical containing from 2 to 20 carbon atoms and possibly containing at least one hetero atom, preferably oxygen, bearing at least one epoxy unit, Y preferably being selected from the following radicals:

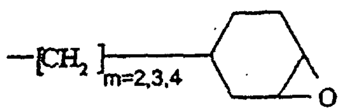 ; 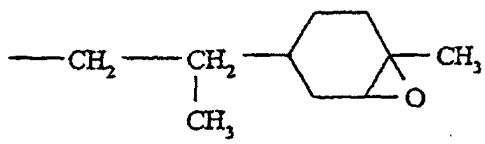

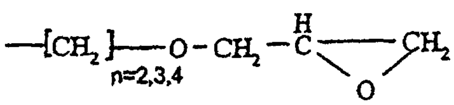 ; 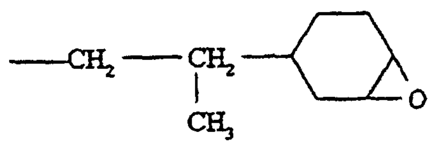

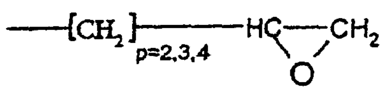 ; 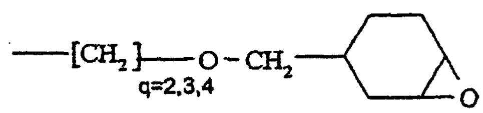

4. Use according to any one of Claims 1 to 3, **characterized in that** the water-repellent liquid silicone composition is an aqueous emulsion containing:

   b) one or more POS (I),
   c) one or more surfactants, and
   d) water.

5. Use according to Claim 4, **characterized in that** the weight proportions of the constituents of the water-repellent liquid silicone composition are such as to give, per 100 parts by weight (pw) of water:

- POS (I): from I to 100 pw, preferably from 1 to 50 and even more preferably from 1 to 15 pw;
- Surfactants: from 0.01 to 10 pw, preferably from 0.1 to 10 and even more preferably from 1 to 5 pw.

6. Use according to any one of Claims 1 to 3, **characterized in that** the water-repellent liquid silicone composition is a solution of the POS(s) (I) in an organic solvent.

**7.** Use according to Claim 3 and optionally Claim 4 and/or 5 and/or 6, **characterized in that** the porous mineral building material is selected from the group consisting of:

- $CaCO_3$-based minerals,
- $SiO_2$-based minerals,
- aluminosilicate-based minerals,
- terracottas,
- concretes/mortars, and
- mixtures thereof.

**8.** Use according to Claim 1, **characterized in that** the POS (I) contains radicals Y bearing (di)carboxy, (di)carboxylate and/or anhydride units and **in that** the porous building material is selected from minerals comprising $CaCO_3$.

**9.** Use according to any one of Claims 1 to 8, **characterized in that** the active material of the water-repellent liquid silicone composition is free of functionalized or nonfunctionalized silane(s).

**10.** Use according to any one of Claims 1 to 9, **characterized in that** the water-repellent liquid silicone composition comprises additives chosen from the group consisting of:

- silicas, preferably colloidal silicas,
- Lewis acids, preferably sulfates and/or hydrogen sulfates and/or triflates and/or oxalates and/or silicates,
- silicone resins comprising siloxy units M, Q and/or T,
- alkylaminosilanes preferably chosen from those of general formula (II) below:

$$R^5\text{-[Si]}[OR^6]_3 \qquad (II)$$

in which:

  - $R^5$ is an aminoalkyl radical containing from 1 to 6 carbon atoms or a group of general formula: $H_2N\text{-}(CH_2)_xR^7\text{-}(CH_2)_z\text{-}$; with $R^7$ representing O, S, -NH- or $NH\text{-}CH_2\text{-}CH_2\text{-}NH\text{-}$ and $x \geq 2$, $y \geq 2$; or a group of general formula: $(R^6O)_3\text{-}(CH_2)_x\text{-}NH\text{-}(CH_2)_x$, with x as defined above;
  - $R^6$ corresponding to $C_nH_{2n+1}$ with n = 0 to 10;

- aminated additives, and
- mixtures thereof.

**11.** Process for making a porous mineral building material water-repellent, this process consisting in impregnating the said material with a liquid composition comprising at least one polyorganosiloxane (POS),
**characterized in that**:

- a linear or cyclic POS as defined in Claim 1 is used, bearing units

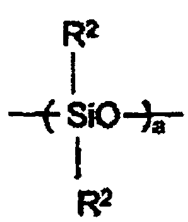
and
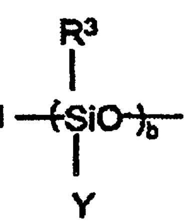

this POS preferably being linear of formula (I) as defined in Claim 1 or 2, this POS (I) representing at least 50% by weight of the active material of the liquid silicone impregnation composition,
- this composition is applied to the porous mineral building material,
- the POS (I) and the porous mineral building material are left in contact so that the said POS (I) crosslinks and/or a reaction of the POS (I) with the material takes place, this reaction leading to the formation of bonds

between the POS (I) and the material.